# EUROPEAN PATENT SPECIFICATION

(11) **EP 4 247 752 B1**
(45) Date of publication and mention of the grant of the patent: **30.04.2025**
(21) Application number: 21895273.7
(22) Date of filing: 19.11.2021
(51) Int. Cl.: B67D 7/06, B65G 53/34, B65D 47/00

(54) **APPARATUS FOR LIQUID TRANSFER**
VORRICHTUNG ZUM FLÜSSIGKEITSTRANSFER
APPAREIL DE TRANSFERT DE LIQUIDE

(30) Priority: 21.11.2020 TR 202018735
(43) Date of publication of application: 27.09.2023
(73) Proprietor: ORGANIK KIMYA SANAYI VE TICARET A.S., 34075 Eyüpsultan/Istanbul (TR)
(72) Inventor: SENEL, Osman, 34075 Eyüpsultan/Istanbul (TR); AÇAN, Merih, 34075 Eyüpsultan/Istanbul (TR); GÜNDÜZ, Sertaç, 34075 Eyüpsultan/Istanbul (TR); BAS, Idris, 34075 Eyüpsultan/Istanbul (TR)
(74) Representative: Müller-Boré & Partner Patentanwälte PartG mbB
(86) International application number: PCT/TR2021/051244
(87) International publication number: WO 2022/108567

(56) References cited:
- FR-A1- 2 972 956
- JP-A- 2003 012 151
- JP-A- 2018 119 455
- US-A- 5 398 733
- US-A1- 2016 280 531
- US-A1- 2020 223 600

## Description

### Technical Field of The Invention

The present invention relates to an apparatus developed to ensure that any liquid that is stored in a container and intended to be transferred, is transferred from the container to another medium with minimal waste. The present invention also relates to the use of this apparatus in liquid transfer.

### Background of the Invention

Today, many fluid materials are stored in glass or plastic-derived packages. Cleaning materials such as bleach, liquid detergent; personal care materials such as toothpaste; food such as olive oil and drinks are stored in a package like many other products offered to the end consumer. It is often not possible to transfer the entire product out of these type of packages, especially where fluids with high viscosity are stored, and some of the purchased product is disposed of with the packaging before it can be used for the intended purpose. Although these losses are at a level that can be ignored in personal use, especially on an industrial scale, the amount of lost product can be very high considering the amounts lost every time the fluid materials that are stored in different types of packaging with a wide variety of viscosities, are transferred from one place to another.

In the state of the art, various solutions to the aforementioned problem have been proposed. TR 2011/10812 discloses a practical bottle emptying apparatus and said apparatus is mounted in the bottle mouth to allow the discharge of fluid in glass or plastic derivative bottles. It is intended for the discharge of products that are packaged suitable for the use of end consumers, where personal use such as food and cleaning materials are involved. Document US 2016/280531 A1 discloses a liquid transfer apparatus according to the preamble of claim 1.

In the state of art, there is no disclosure relating to a liquid transfer equipment used in the transfer of fluidic materials stored in packages used on an industrial scale and developed for the reduction of waste.

### Summary of the Invention

The present invention was developed for the purpose of liquid transfer with an equipment that can be used independently of the packaging which contains the stored fluid and is suitable for use with many different packaging types. In addition, it is aimed to reduce the amount of products lost due to waste reaching very high quantities on an industrial scale. After the definition of this problem in the state of the art, biomimetic was used as a method for the development of the solution:
Biomimetics; according to its definition in dictionary, is a branch of science that examines models in nature and then aims to solve people's problems by imitating or inspired by these designs. It is used in fields such as science, technology, art, architecture, artificial intelligence, nanotechnology, robotics, industry, military research, transportation.

Throughout history, human beings has imitated nature in many inventions and studies on this subject have been increasing in recent years. The main idea of biomimetics is the fact that nature has already solved most of the problems that humans are struggling with today. What the researchers have in common is that they respect the design in nature, researching the intricacies of design in detail and being inspired by using them to solve the problems that people face. Nature is a mentor, a source of ideas for people. These systems have been in the process for millions of years and it is necessary to act together with nature for the continuity of these systems.

The recognition of biomimetics as a science doesn't really go back much. One of its first applications occurred in the 1940s; while Swiss engineer George de Mestral was walking with his dog, a plant species clung to the dog and his own trousers. Realizing that this plant was barely separated from clothes and from his dog, Mestral came up with an idea and with his inspiration from this plant, velcro tape was invented, which is widely used in the clothing industry today.

To solve technical problems in many different fields to date, the inventors have been inspired by the solutions of related problems that have been used in nature for centuries. The present invention was also made using a solution that already exists in nature to solve a similar problem.

Today, packaging has been a significant part of human life and has become an important and constantly developing sector with its benefits to consumers and businesses. Similarly for the chemical industry, it is very important both for storing raw materials to be used in production and for the produced products to be stored and sent to the customer. Especially in a chemical sector consisting of chemical plants scattered in different parts of the city or country instead of organized industrial zones, it is often not possible to carry out liquid transfers using closed systems with the help of a line. As a result, it is inevitable to use IBC, barrels and similar types of packaging in the transfer of liquids. Therefore, in a chemical production facility, a raw material to be used as a liquid in fluidic form; It is quite common to supply it in IBC or barrel. Besides this, it is often necessary to transfer the produced products by filling them into IBC and/or barrel packages. The transfer of fluidic materials into packaging in this way brings with it a very important problem: increased waste rates.

Transferring liquids through pipelines in a closed system instead of being taken from one place to another is one of the methods that can significantly reduce waste rates. However, even in the facilities where chemical plants cluster very close to each other, the use of packaging will not be completely prevented, even if the use of packaging decreases. However, it is known that raw material and intermediate product transfers are mostly made using various types of packaging among chemical facilities scattered in many different places in many countries. Alternatively, it is possible to ship products by tanker, but it is not always the most suitable solution. For this reason, it is common for raw materials, intermediates and end products in fluid form to be transferred using IBC and/or barrel and similar packages most countries around the world.

In transfers made using packaging, the increasing number of packages with the decrease in packaging volume, causes an increase in amount of waste with the same rate. Because there is some liquid left after the transfer in each package that is used. The amount of liquid remaining inside varies according to the method and equipment used when unloading, so the waste ratios depend on the volume of the relevant packages as well as the method used to unload.

Various trials were carried out using 1000 kg packages to determine the ratio of waste. In order to calculate the waste, the packages are weighed. The packaging was weighed both after transfers and before transfers and their waste values were analyzed. As a result of the weighing, 15 kg of raw materials or products cannot be taken from the packaging for a package of 1000 kg and as a result, this amount of waste occurs per packaging. Therefore, when IBC packages are used, this amounts to a waste rate of 1.5% in discharges/transfers made by traditional methods.

In the state of the art, there is no equipment and/or method developed to solve this problem on an industrial scale.

The aim of the present invention is to develop a new equipment that can be used independently of the packaging and a new transfer method using this new equipment in order to reduce the waste ratios in the transfer/discharge of raw materials, intermediates and end products stored in fluid form and IBC, barrel and similar packages.

### Detailed Description of the Invention

Another aspect of the present invention is that it was inspired by an existing solution in nature to solve the technical problem described in detail above. As it is known, biomimetics is a branch of science that examines models in nature and then aims to solve people's problems by being inspired by these designs. In order to solve the aforementioned problem, the existing liquid transfer models in nature were examined and the proboscis of elephants (elephant's trunk) was identified as the most suitable design for solving the current problem.

Therefore, by examining the trunks of elephants and making the necessary engineering calculations, it was evaluated whether it was possible to use this design in accordance with the purpose of the present invention. The problem with the equipment known in the prior art and used when transferring is that some liquid remains in the packaging after each transfer. It has been determined that the traction speed must be increased in order to solve this problem. As a result of the calculations made with "Bernoulli Equation" for this purpose, it was decided to use a narrower equipment to increase the flow rate of the flow system used. Accordingly, faster fluid pass from a smaller diameter pipe is the result. However, the use of narrower diameter pipes reduces the flow rate of the transfer. The biomimetic design approach was used for the inspiration to overcome this problem. As a result, elephants, as one of the best animals being known in liquid suction, were used as inspiration to develop the present invention. The principle of operation of the elephant's trunk was examined from an engineering point of view and new product design was made. In conclusion, the end part (tip) of the liquid transfer equipment developed according to the present invention is optimized and designed as a result of controlled experiments, in a flat and double channel structure suitable for suction.

Indeed, elephants are examples of creatures that can absorb/transfer liquids in the most effective way known in nature. The long, playful and muscular proboscis is actually a versatile limb that is formed by the fusion of the nose and upper lip. The inside of the trunk is very sensitive and the base of the nasal compartment is divided in half by a cartilage, these compartments are useful when holding and receiving small objects. The proboscis, which consists of various muscle groups, is strong enough to lift weights up to 350 kg and sensitive enough to perform movements such as wiping the eyes. In addition, elephants can draw water into their proboscis to drink water or spray it on their bodies. An adult elephant can hold up to 8.5 liters of water with its proboscis and breathe under water using its proboscis in a similar way to a snorkel.

Using the biomimetic design approach, the information accumulated in millions of years in nature was utilized and, as mentioned, the proboscis of elephants was used as a model for the development of the current invention as the best known example of fluid transfer. The detailed description of the present invention developed for liquid transfer, together with the parts that make up the invention, is as follows.

### Parts That Make Up the Invention

1. Hose Fastener
2. 90° Elbow
3. Main Pipe of Transfer Apparatus
4. Separator Surface (Plate)
5. Suction Tip

The present invention is a liquid transfer apparatus containing a hose fastener (1), 90° elbow (2) and a main pipe of the transfer apparatus (3), which allows fluidic materials to be transferred from inside the packaging to another place, which is stored in industrial type packages and are intended to be transferred, characterized in that; the main pipe of the said transfer apparatus (3) comprises a plate (4) that divides the flow channel in half to speed up liquid transfer, and a suction-appropriate flat and double-channel suction tip (5) widening at the end of the main pipe (3) that comes into contact with the liquid to be transferred.

According to an embodiment of the present invention, the liquid material to be transferred with the liquid transfer apparatus comprises a polymeric material. According to another embodiment, the liquid desired to be transferred is an emulsion polymer.

In other embodiments of the present invention the liquid transfer apparatus is used in order to transfer a liquid material which is an emulsion polymer with a viscosity below 1 Pa×s (1000 cps) or in the range of 1 Pa×s (1,000 cps) and 10 Pa×s (10,000 cps) or higher than 10 Pa×s (10,000 cps).

In another embodiment, the liquid transfer apparatus according to the present invention is used in a method to make liquid transfers from industrial-scale packages.

In different embodiments, the liquid transfer apparatus according to the present invention is used in a liquid transferring method wherein the liquid is transferred from packages of IBC or barrel types. Thus, the present invention is also directed to the use of liquid transfer apparatus in liquid transfers made from IBC or barrel type packages.

### Brief Description of Drawings

Hose fastener (1) from one end is connected to the main pipe of transfer apparatus (3). The other end is used to provide the pump connection, which provides traction power for liquid transfer. The main pipe of the transfer apparatus (3) is the pipe through which the drawn liquid (fluid) passes through and is divided into two with the help of a plate (4) located inside. At the far end of the transfer equipment is the suction tip (5) and this is the part that comes into contact with the liquid desired to be transferred. The suction tip at the far end is designed in a flat and double channel structure by optimizing as a result of controlled experiments in order to be suitable for optimized suction. The most important element that gives the characterizing feature to the present invention is the design of the suction tip in this way and is shown in detail in the drawings.

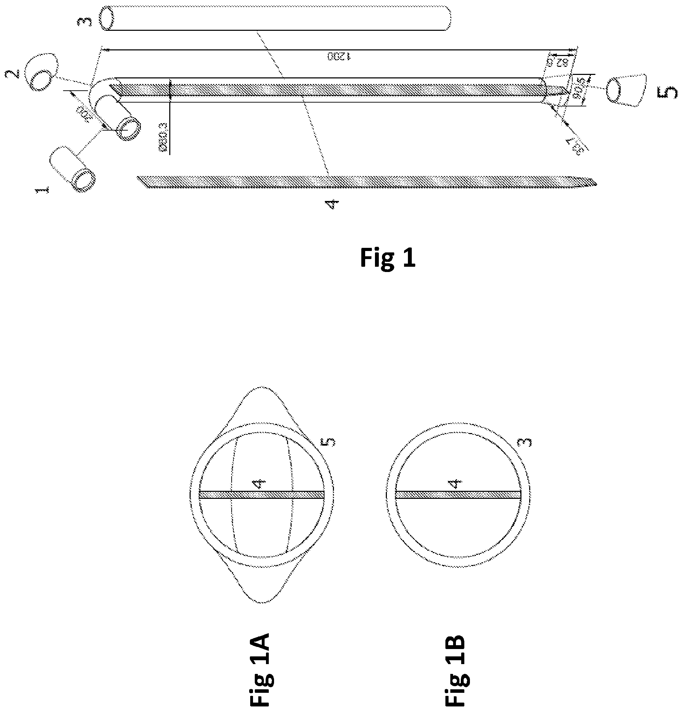

Fig 1 A shows the suction tip (5) of liquid transfer apparatus from above with the interior details.
Fig 1B shows the main pipe of liquid transfer apparatus (3) from above with the interior details.

## Claims

1. A liquid transfer apparatus for transferring fluidic materials stored in industrial type packages from inside the packaging to another place, comprising a hose fastener (1), a 90° elbow (2) and a main pipe of the transfer apparatus (3), **characterized in that**;
the main pipe of the transfer apparatus (3) comprises a plate (4) that divides the flow channel in half to speed up liquid transfer, and a suction-appropriate flat and double-channel suction tip (5) widening at the end of the main pipe (3) that comes into contact with the liquid to be transferred.

2. The liquid transfer apparatus according to claim 1, further comprising the liquid to be transferred, wherein the liquid to be transferred comprises polymeric material.

3. The liquid transfer apparatus according to claim 2, further comprising the liquid to be transferred, wherein the liquid to be transferred is an emulsion polymer.

4. The liquid transfer apparatus according to claim 3, further comprising the liquid to be transferred, wherein the liquid to be transferred is an emulsion polymer having a viscosity up to 1 Pa×s (1000 cps).

5. The liquid transfer apparatus according to claim 3, further comprising the liquid to be transferred, wherein the liquid to be transferred is an emulsion polymer having a viscosity between 1 Pa×s (1000 cps) and 10 Pa×s (10.000 cps).

6. The liquid transfer apparatus according to claim 3, further comprising the liquid to be transferred, wherein the liquid to be transferred is an emulsion polymer having a viscosity more than 10 Pa×s (10.000 cps).

7. A method for liquid transfer **characterized in that** the liquid transfer apparatus of claims 1 to 6 is used for the liquid transfers made from industrial scale packages.

8. A method for liquid transfer according to claim 7 **characterized in that** the liquid transfer apparatus of claims 1 to 6 is used for the liquid transfers made from IBC type packages.

9. A method for liquid transfer according to claim 7 **characterized in that** the liquid transfer apparatus of claims 1 to 6 is used for the liquid transfers made from barrel type packages.

## Patentansprüche

1. Flüssigkeitstransfervorrichtung zum Transferieren von in Industrieverpackungen gelagerten flüssigen Materialien aus dem Inneren der Verpackung an einen anderen Ort, umfassend eine Schlauchbefestigung (1), einen 90°-Winkel (2) und ein Hauptrohr der Transfervorrichtung (3), **dadurch gekennzeichnet, dass**
das Hauptrohr der Transfervorrichtung (3) eine Platte (4), die den Strömungskanal in zwei Hälften teilt, um den Flüssigkeitstransfer zu beschleunigen, und eine saugfähige flache und zweikanalige Saugspitze (5), die sich am Ende des Hauptrohrs (3), das mit der zu transferierenden Flüssigkeit in Kontakt kommt, erweitert, umfasst.

2. Flüssigkeitstransfervorrichtung nach Anspruch 1, weiter umfassend die zu transferierende Flüssigkeit umfasst, wobei die zu transferierende Flüssigkeit Polymermaterial umfasst.

3. Flüssigkeitstransfervorrichtung nach Anspruch 2, weiter umfassend die zu transferierende Flüssigkeit, wobei die zu transferierende Flüssigkeit ein Emulsionspolymer ist.

4. Flüssigkeitstransfervorrichtung nach Anspruch 3, weiter umfassend die zu transferierende Flüssigkeit, wobei die zu transferierende Flüssigkeit ein Emulsionspolymer mit einer Viskosität von bis zu 1 Pa × s (1000 cps) ist.

5. Flüssigkeitstransfervorrichtung nach Anspruch 3, weiter umfassend die zu transferierende Flüssigkeit, wobei die zu transferierende Flüssigkeit ein Emulsionspolymer mit einer Viskosität zwischen 1 Pa×s (1000 cps ) und 10 Pa×s (10.000 cps) ist.

6. Flüssigkeitstransfervorrichtung nach Anspruch 3, weiter umfassend die zu transferierende Flüssigkeit, wobei die zu transferierende Flüssigkeit ein Emulsionspolymer mit einer Viskosität von mehr als 10 Pa × s (10.000 cps) ist.

7. Verfahren zum Flüssigkeitstransfer, **dadurch gekennzeichnet, dass** die Flüssigkeitstransfervorrichtung nach Ansprüchen 1 bis 6 für den Flüssigkeitstransfer aus Industriemaßstab-Verpackungen verwendet wird.

8. Verfahren zum Flüssigkeitstransfer nach Anspruch 7, **dadurch gekennzeichnet, dass** die Flüssigkeitstransfervorrichtung nach Ansprüchen 1 bis 6 für den Flüssigkeitstransfer aus IBC-Typ-Verpackungen verwendet wird.

9. Verfahren zum Flüssigkeitstransfer nach Anspruch 7, **dadurch gekennzeichnet, dass** die Flüssigkeitstransfervorrichtung nach Ansprüche 1 bis 6 für den Flüssigkeitstransfer aus Fass-Typ-Verpackungen verwendet wird.

## Revendications

1. Appareil de transfert de liquide pour transférer des matériaux fluides stockés dans des emballages de type industriel de l'intérieur de l'emballage à un autre endroit, comprenant un dispositif de fixation de tuyau souple (1), un coude à 90° (2) et un tuyau principal de l'appareil de transfert (3), **caractérisé en ce que** :
le tuyau principal de l'appareil de transfert (3) comprend une plaque (4) qui divise le canal d'écoulement en deux pour accélérer le transfert de liquide et une pointe d'aspiration plate convenant à l'aspiration et à double canal (5) s'élargissant à l'extrémité du tuyau principal (3) qui vient en contact avec le liquide devant être transféré.

2. Appareil de transfert de liquide selon la revendication 1, comprenant en outre le liquide devant être transféré, dans lequel le liquide devant être transféré comprend du matériau polymère.

3. Appareil de transfert de liquide selon la revendication 2, comprenant en outre le liquide devant être transféré, dans lequel le liquide devant être transféré est un polymère en émulsion.

4. Appareil de transfert de liquide selon la revendication 3, comprenant en outre le liquide devant être transféré, dans lequel le liquide devant être transféré est un polymère en émulsion ayant une viscosité allant jusqu'à 1 Paxs (1000 cps).

5. Appareil de transfert de liquide selon la revendication 3, comprenant en outre le liquide devant être transféré, dans lequel le liquide devant être transféré est un polymère en émulsion ayant une viscosité comprise entre 1 Paxs (1000 cps) et 10 Paxs (10 000 cps).

6. Appareil de transfert de liquide selon la revendication 3, comprenant en outre le liquide devant être transféré, dans lequel le liquide devant être transféré est un polymère en émulsion ayant une viscosité supérieure à 10 Paxs (10 000 cps).

7. Procédé de transfert de liquide, **caractérisé en ce que** l'appareil de transfert de liquide selon les revendications 1 à 6 est utilisé pour les transferts de liquide réalisés à partir d'emballages à l'échelle industrielle.

8. Procédé de transfert de liquide selon la revendication 7, **caractérisé en ce que** l'appareil de transfert de liquide selon les revendications 1 à 6 est utilisé pour les transferts de liquide réalisés à partir d'emballages de type GRV.

9. Procédé de transfert de liquide selon la revendication 7, **caractérisé en ce que** l'appareil de transfert de liquide selon les revendications 1 à 6 est utilisé pour les transferts de liquide réalisés à partir d'emballages de type tonneau.
